# EUROPEAN PATENT SPECIFICATION

(11) **EP 3 203 339 B1**
(45) Date of publication and mention of the grant of the patent: **08.05.2019**
(21) Application number: 15846280.4
(22) Date of filing: 13.07.2015
(51) Int. Cl.: G05D 1/02, A01B 69/00

(54) **OPERATION CONTROL SYSTEM**
BETRIEBSSTEUERUNGSSYSTEM
SYSTÈME DE CONTRÔLE DE FONCTIONNEMENT

(30) Priority: 30.09.2014 JP 2014199819
(43) Date of publication of application: 09.08.2017
(73) Proprietor: Panasonic Intellectual Property Management Co., Ltd., Osaka-shi, Osaka 540-6207 (JP)
(72) Inventor: TANI, Noriyuki, Osaka-shi, Osaka 540-6207 (JP)
(74) Representative: Grünecker Patent- und Rechtsanwälte PartG mbB
(86) International application number: PCT/JP2015/003528
(87) International publication number: WO 2016/051632

(56) References cited:
- EP-A1- 1 918 075
- JP-A- H08 194 539
- JP-A- H08 194 539
- JP-A- S59 206 533
- JP-A- 2004 268 736
- JP-A- 2007 038 312
- JP-A- 2011 043 884
- SUZUKI TARO ET AL: "Vehicle Teleoperation Using 3D Maps and GPS Time Synchronization", IEEE COMPUTER GRAPHICS AND APPLICATIONS, IEEE SERVICE CENTER, NEW YORK, NY, US, vol. 33, no. 5, 1 September 2013 (2013-09-01), pages 82-88, XP011526638, ISSN: 0272-1716, DOI: 10.1109/MCG.2013.81 [retrieved on 2013-09-11]

## Description

The present invention relates to an operation control system that perform vehicle operation control.

In recent years, control technology for automatically driving a vehicle in a remote area by using a remote control (remote manipulator) has been developed. PTL 1 discloses an operation control device equipped with a monitoring device. This monitoring device monitors a surrounding area of the vehicle when the operation control device remotely operates a vehicle. If the monitoring device senses any abnormality, the operation control device changes a running state of the vehicle.
EP 1 918 075 A1 relates to a system for remote control of a mobile robot. The system prevents a robot from suddenly starting to move when a disconnected communication with an external terminal is recovered.

PTL 1: Unexamined Japanese Patent Publication No. 2007-334765

The present invention provides an operation control system that, even if a state of the communication between a remote manipulator and a controlled vehicle is lowered, can appropriately deal with this lowered state.
This is achieved by the features of the independent claim.

An operation control system of the present invention includes: a remote manipulator including a transmitter that transmits a signal containing time information; and an operation control device that conducts wireless communication with the remote manipulator to perform vehicle operation control. The operation control device includes a clock, a receiver, a calculator, and a controller. The receiver receives the signal containing the time information from the remote manipulator. The calculator calculates a delay time of the wireless communication, based on the time information and a time indicated by the clock. When the delay time is equal to or more than a threshold, the controller changes the vehicle operation control from a normal control to a safety control.

According to the present invention, even if a state of the communication between a remote manipulator and a controlled vehicle is lowered, it is possible to appropriately deal with this lowered state.

### BRIEF DESCRIPTION OF DRAWINGS

FIG. 1 is a view of an exemplary operation control system according to a first exemplary embodiment of the present invention.
FIG. 2 is a first flowchart of an operation performed by the operation control system according to the first exemplary embodiment of the present invention.
FIG. 3 is a second flowchart of the operation performed by the operation control system according to the first exemplary embodiment of the present invention.
FIG. 4 is a third flowchart of the operation performed by the operation control system according to the first exemplary embodiment of the present invention.
FIG. 5 is a flowchart of an operation performed by an operation control system according to a second exemplary embodiment of the present invention.
FIG. 6 is a flowchart of an operation performed by an operation control system according to a third exemplary embodiment of the present invention.
FIG. 7 is a view of an exemplary operation control system according to a fourth exemplary embodiment of the present invention.
FIG. 8 is a flowchart of an operation performed by the operation control system according to the fourth exemplary embodiment of the present invention.
FIG. 9 is a flowchart of an operation performed by an operation control system according to a fifth exemplary embodiment of the present invention.
FIG. 10 is a flowchart of an operation performed by an operation control system according to a sixth exemplary embodiment of the present invention.

### DESCRIPTION OF EMBODIMENTS

Prior to a description of exemplary embodiments of the present invention, a problem with conventional operation control systems will be described briefly. A remote manipulator and a vehicle operation control device are expected to communicate with each other in a wireless manner. In this case, even if no abnormality occurs in the vehicle, there is a risk that a state of the communication between the remote manipulator and the operation control device is lowered due to interference from another user, for example. The lowered communicating state may cause a communication delay when the remote manipulator transmits a control signal to the operation control device. The delay of the control signal might inhibit a normal automatic operation of the vehicle.

The exemplary embodiments of the present invention will be described below in detail with reference to the accompanying drawings. It should be noted that the exemplary embodiments that will be described below are examples and not intended to limit the present invention.

### FIRST EXEMPLARY EMBODIMENT

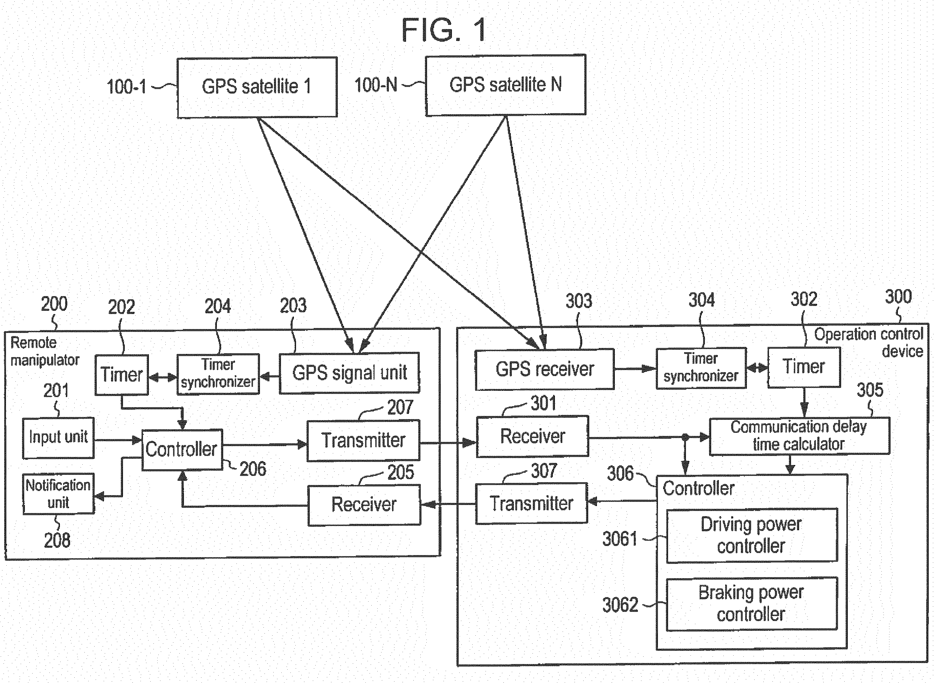

FIG. 1 is a view of an exemplary operation control system according to a first exemplary embodiment of the present invention. This operation control system includes remote manipulator 200 and operation control device 300 as main constituent elements. Remote manipulator 200 is, for example a smartphone or other portable terminal. Operation control device 300 is installed in a vehicle. Each of remote manipulator 200 and operation control device 300 can receive signals from GPS satellites 100-1 and 100-N.

Each of GPS satellites 100-1 and 100-N has accurate time information. Each of remote manipulator 200 and operation control device 300 receives signals from the individual GPS satellites, thereby acquiring the accurate time information. Then, operation control device 300 and remote manipulator 200 are synchronized with each other.

Remote manipulator 200 includes input unit 201, timer 202, GPS receiver 203, timer synchronizer 204, receiver 205, controller 206, transmitter 207, and notification unit 208.

Input unit 201 receives an operating instruction from a user and outputs the received operating instruction to controller 206. Input unit 201 may be operation buttons or a touch panel, for example.

Timer 202 retains time information (e.g., current time) by measuring time. Controller 206 reads the time information from timer 202. The time information retained in timer 202 is modified by timer synchronizer 204.

GPS receiver 203 receives signals each containing time information from GPS satellites 100-1 to 100-N and then outputs the time information contained in the signals to timer synchronizer 204. GPS receiver 203 may repeatedly receive the signals each containing the time information and output the time information to timer synchronizer 204.

Timer synchronizer 204 synchronizes the time information retained in timer 202 with the time information received from GPS receiver 203, modifying the time information retained in timer 202. Timer synchronizer 204 may modify the time information retained in timer 202 every time receiving the time information from GPS receiver 203.

Receiver 205 receives information from operation control device 300. The received information contains a notification signal from operation control device 300 to remote manipulator 200.

When receiving the operating instruction from input unit 201, controller 206 reads time from timer 202 and acquires transmission timing information that indicates the time when an operating signal will be transmitted. Then, controller 206 generates the operating signal containing the operating instruction and the transmission timing information and outputs this operating signal to transmitter 207.

When receiving the notification signal from receiver 205, controller 206 outputs notification information contained in the notification signal to notification unit 208.

Transmitter 207 transmits the operating signal received from controller 206 to operation control device 300 in a wireless manner.

Notification unit 208 notifies the user that the notification information has been received from controller 206. Notification unit 208 may be a display device such as a display or an audio output device such as a speaker, for example.

Operation control device 300 includes receiver 301, timer (clock) 302, GPS receiver 303, timer synchronizer 304, communication delay time calculator 305 (referred to below as calculator 305), controller 306, and transmitter 307.

Receiver 301 receives the operating signal containing the operating instruction for operating the vehicle and the transmission timing information from remote manipulator 200. Receiver 301 outputs the received operating signal to calculator 305 and controller 306.

Timer 302 retains time information (e.g., current time) by measuring time. Controller 305 reads the time information from timer 302. The time information retained in timer 302 is modified by timer synchronizer 304.

GPS receiver 303 repeatedly receives the signals each containing time information from GPS satellites 100-1 to 100-N. Every time receiving the signals, GPS receiver 303 outputs the time information contained in the signal to timer synchronizer 304.

Timer synchronizer 304 synchronizes the time information retained in timer 302 with the time information received from GPS receiver 303, and modifies the time information retained in timer 302. Timer synchronizer 304 may modify the time information retained in timer 302 every time receiving the time information from GPS receiver 303.

Calculator 305 acquires transmission timing information from the operating signal received from receiver 301. In addition, calculator 305 reads the time information from timer 302, and acquires reception timing information that indicates the time when the operating signal was received. Calculator 305 calculates a communication delay time that indicates a time elapsed from the transmission of the operating signal to the reception of the operating signal, based on the transmission timing information and the reception timing information.

More specifically, calculator 305 calculates the communication delay time by subtracting the transmission time indicated by the transmission timing information from the reception time indicated by the reception timing information. Then, calculator 305 outputs the calculated communication delay time to controller 306.

Controller 306 acquires the operating instruction from the operating signal received from receiver 301. Based on this operating instruction, controller 306 controls the vehicle in a normal state (normal control). Controller 306 illustrated in FIG. 1 includes driving power controller 3061 and braking power controller 3062.

Driving power controller 3061 controls a driving member (not illustrated), such as an engine, thereby controlling the start and acceleration of the vehicle. Braking power controller 3062 controls a braking member (not illustrated), such as a brake, thereby controlling the deceleration and stop of the vehicle.

Controller 306 changes the control of the vehicle, based on the communication delay time received from calculator 305. More specifically, controller 306 compares the communication delay time with a preset value (threshold). If the communication delay time is equal to or more than the preset value, controller 306 changes the control of the vehicle in a normal state (normal control) to safe control suitable for a case where any abnormality occurs (safety control). If the communication delay time is less than the preset value and the control of the vehicle is the safety control, controller 306 changes the safety control to the normal control. Details of the control change performed by controller 306 will be described later.

As described above, receiver 301 receives the signal containing the time information from remote manipulator 200. Then, calculator 305 calculates the delay time in the wireless communication, based on the time information contained in the signal and a time indicated by timer 302. If the delay time is equal to or more than the threshold, controller 306 changes the vehicle operation control from the normal control to the safety control.

When the control based on the operating instruction is completed, controller 306 generates the notification signal containing the notification information that indicates the completion of the control. Then, controller 306 outputs the generated notification signal to transmitter 307.

Transmitter 307 transmits the notification signal received from controller 306 to remote manipulator 200 in a wireless manner.

Next, the control change performed by controller 306 will be described. In this exemplary embodiment, the normal control is an automatic operation control at the speed based on the operating instruction, and the safety control is an automatic operation control at a speed lower than the speed based on the operating instruction.

When the communication delay time is equal to or more than the preset value, controller 306 changes the normal control to the safety control by reducing the vehicle speed. More specifically, braking power controller 3062 included in controller 306 controls the braking member in the vehicle, thereby reducing the speed.

When the communication delay time is less than the preset value and the control is performed at a speed lower than the speed based on the operating instruction, controller 306 changes the safety control to the normal control by returning the vehicle speed to the speed based on the operating instruction. More specifically, driving power controller 3061 included in controller 306 controls the driving member in the vehicle, thereby returning the speed.

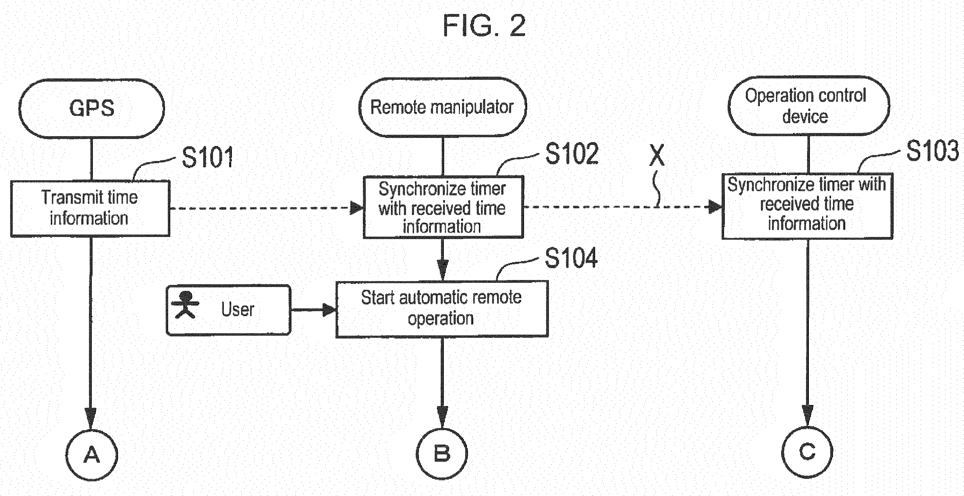

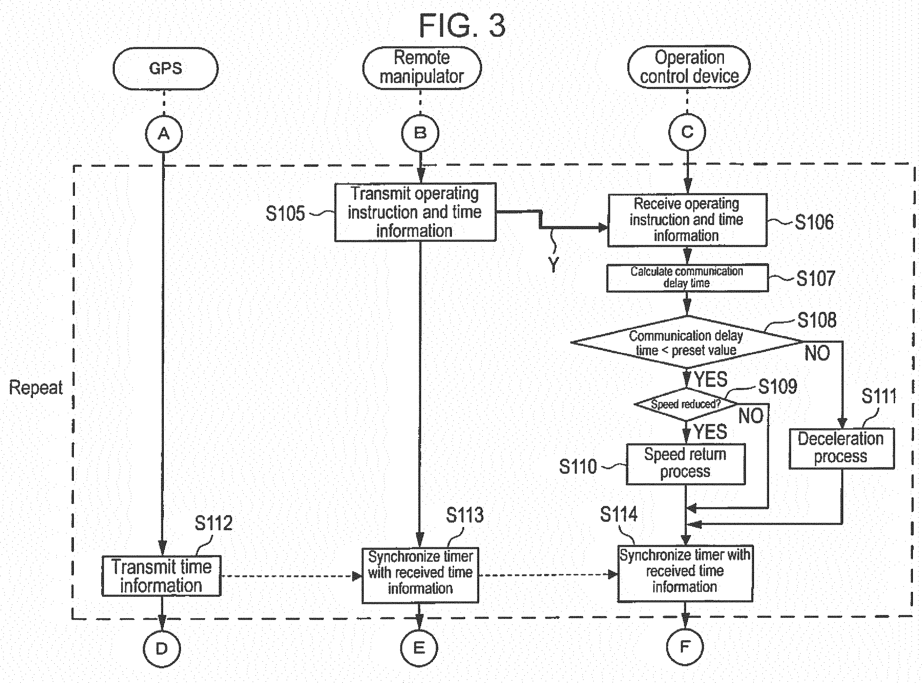

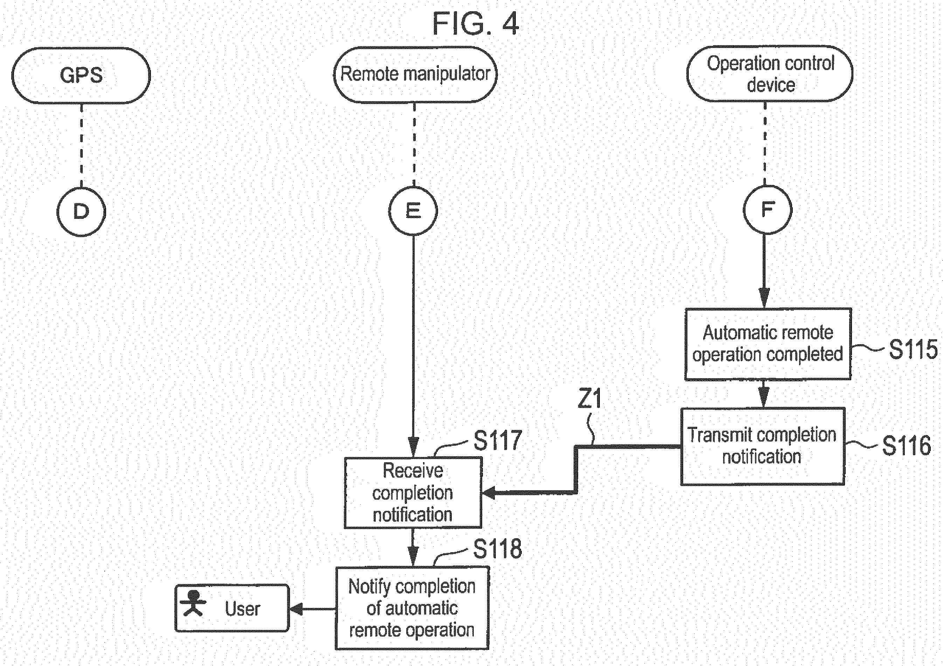

Next, operations performed by GPS satellites 100-1 to 100-N, remote manipulator 200, and operation control device 300 in this exemplary embodiment will be described with reference to FIG. 2. FIG. 2 is a first flowchart of an operation performed by the operation control system in this exemplary embodiment. FIG. 3 is a second flowchart. FIG. 4 is a third flowchart following FIG. 3. FIGS. 2, 3, and 4 constitute a single flowchart in this order.

Each of GPS satellites 100-1 to 100-N transmits a signal containing time information (S101).

GPS receiver 203 in remote manipulator 200 receives the signals each containing the time information from GPS satellites 100-1 to 100-N. Then, timer synchronizer 204 synchronizes time information retained in timer 202 with time information of a GPS, and modifies the time information retained in timer 202 (S102).

GPS receiver 303 in operation control device 300 receives the signals each containing the time information from GPS satellites 100-1 to 100-N. Then, timer synchronizer 304 synchronizes the time information retained in timer 302 with time information of a GPS, and modifies the time information retained in timer 302 (S103).

Following the above, input unit 201 in remote manipulator 200 receives an operating instruction for starting an automatic remote operation from a user (S104).

Controller 206 in remote manipulator 200 generates an operating signal containing the operating instruction and transmission timing information read from timer 202. Then, transmitter 207 transmits the operating signal (arrow Y in FIG. 3) to operation control device 300 in a wireless manner (S105).

Receiver 301 in operation control device 300 receives the operating signal containing the operating instruction for operating the vehicle and the transmission timing information from remote manipulator 200 (S106).

Calculator 305 in operation control device 300 acquires the transmission timing information from the operating signal. In addition, calculator 305 reads time information from timer 302, and then acquires reception timing information that indicates the time when the operating signal was received. After that, calculator 305 calculates a communication delay time that indicates a time elapsed from the transmission of the operating signal to the reception of the operating signal, based on the transmission timing information and the reception timing information (S107).

Following the above, controller 306 compares the communication delay time with the preset value (threshold) (S108). If the communication delay time is less than the preset value at S108, the processing proceeds to S109. If the communication delay time is equal to or more than the preset value, the processing proceeds to Sill.

If the communication delay time is less than the preset value at S108, controller 306 senses a vehicle speed. Then, controller 306 compares the sensed vehicle speed with the speed based on the operating instruction (S109). If the sensed vehicle speed is lower than the speed based on the operating instruction at S109 (i.e., the vehicle speed is reduced to less than the speed based on the operating instruction), the processing proceeds to S110; otherwise, the processing proceeds to S114.

If the sensed vehicle speed is lower than the speed based on the operating instruction at S109 (i.e., the vehicle speed is reduced to less than the speed based on the operating instruction), controller 306 performs a process of returning the vehicle speed to the speed based on the operating instruction (speed return process) (S110).

If the communication delay time is equal to or more than the preset value at S108, controller 306 changes the normal control to the safety control by reducing the vehicle speed that has been under the normal control (S111).

Each of GPS satellites 100-1 to 100-N repeatedly transmits signals each containing time information at preset time intervals after S101 (S112).

GPS receiver 203 in remote manipulator 200 receives the signals each containing the time information from GPS satellites 100-1 to 100-N. Then, timer synchronizer 204 in remote manipulator 200 synchronizes the time information retained in timer 202 with time information of a GPS, and modifies the time information retained in timer 202 (S113).

GPS receiver 303 in operation control device 300 receives the signals each containing the time information from GPS satellites 100-1 to 100-N. Then, timer synchronizer 304 in operation control device 300 synchronizes the time information retained in timer 302 with time information of a GPS, and modifies the time information retained in timer 302 (S114).

The processing from S104 to S111 described above is performed between when a GPS satellite transmits first signal containing the time information (S101) and when the GPS satellites transmit the next signal (S112). The processing from S105 to S114 is repeatedly performed every time the GPS satellite transmits a signal containing the time information and is performed until the automatic remote operation has been completed. When the processing from S105 to S114 is repeatedly performed, controller 306 may reduce the speed in steps during the deceleration process (S111). When processing from S105 to S114 is repeated, controller 306 may increase the speed in steps during the speed return process (S110).

When the control based on the operating instruction is completed, controller 306 generates a notification signal containing notification information that indicates the completion of the control (S115).

Transmitter 307 transmits the notification signal (arrow Z1 in FIG. 4) received from controller 306 to remote manipulator 200 in a wireless manner (S116).

When a communicating signal is transmitted in a wireless manner, receiver 205 in remote manipulator 200 receives, from operation control device 300, the notification signal containing information to be notified to remote manipulator 200 (S117).

When the communicating signal is received, notification unit 208 in remote manipulator 200 notifies a user of the notification information received from controller 206 to (S118).

According to the first exemplary embodiment described above, even if the time when a vehicle receives a control signal from a remote manipulator is delayed due to a lowered state of the communication between remote manipulator 200 and operation control device 300, it is possible to deal with the communication delay by reducing the vehicle speed, thereby achieving a safe automatic remote operation.

### (Second exemplary embodiment)

In the foregoing first exemplary embodiment, the normal control is an automatic operation control at the speed based on the operating instruction, and the safety control is an automatic operation control at a speed lower than the speed based on the operating instruction. In this exemplary embodiment, the normal control is automatic operation control at the speed based on the operating instruction, but the safety control is control that involves stopping the vehicle.

A configuration of an operation control system according to this exemplary embodiment is similar to the configuration illustrated in FIG. 1 and will not be described accordingly. In this exemplary embodiment, however, controller 306 included in operation control device 300 performs processing somewhat different from that in first exemplary embodiment.

If the communication delay time is equal to or more than the preset value, controller 306 changes the normal control to the safety control by stopping the vehicle. More specifically, braking power controller 3062 included in controller 306 controls the braking member in the vehicle, and driving power controller 3061 included in controller 306 controls the driving member in the vehicle, thereby stopping the vehicle.

If the communication delay time is less than the preset value and the vehicle is stopped, controller 306 changes the safety control to the normal control by returning the vehicle speed to the speed based on the operating instruction. More specifically, driving power controller 3061 included in controller 306 controls the driving member in the vehicle, and then returns the speed.

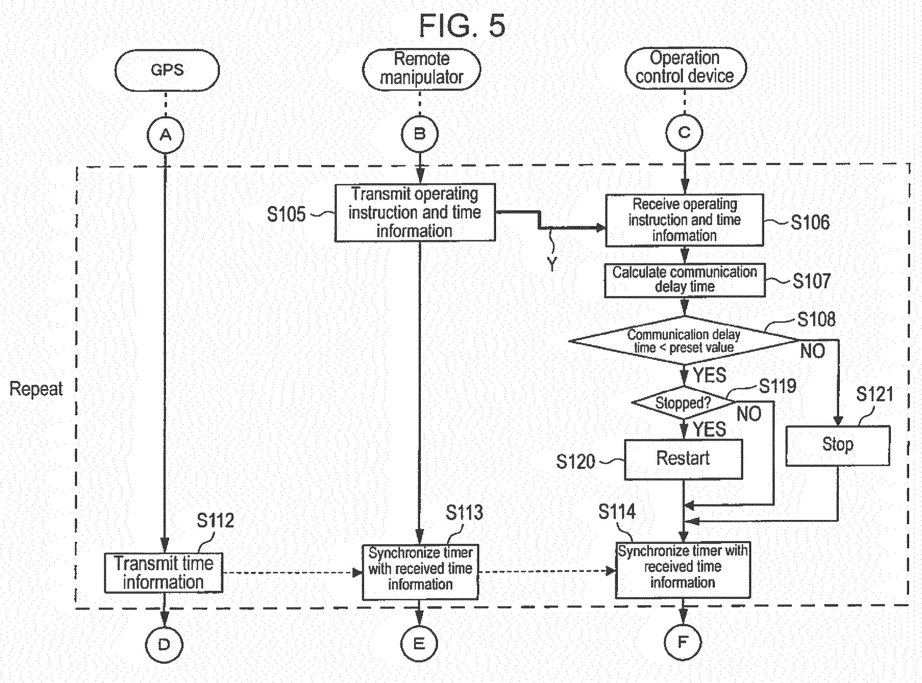

Next, an operation performed by the operation control system in this exemplary embodiment will be described with reference to FIG. 5. FIG. 5 is a portion of a flowchart indicating the operation control system in this exemplary embodiment. FIG. 5 illustrates a flow performed between the first flowchart illustrated in FIG. 2 and the third flowchart illustrated in FIG. 4. The first flowchart (FIG. 2) and the third flowchart (FIG. 4) are identical to the first exemplary embodiment and will not be described accordingly.

In the second flowchart illustrated in FIG. 5, S119 to S121 are the replacement for S109 to S111 in the flowchart illustrated in FIG. 3. Hereinafter, of the steps in the flowchart illustrated in FIG. 5, steps similar to those in FIG. 3 will not be described and only substituted steps S119 to S121 will be described.

If the communication delay time is less than the preset value at S108, controller 306 senses whether the vehicle is stopped (S119). If it is sensed that the vehicle is stopped at S119, the processing proceeds to S120; otherwise, the processing proceeds to S114.

If it is sensed that the vehicle is stopped at S119, controller 306 performs a process (speed return process) of restarting the vehicle and returning its speed to the speed based on the operating instruction (S120).

If the communication delay time is equal to or more than the preset value at S108, controller 306 changes the normal control to the safety control by stopping the vehicle. If the vehicle is already stopped in this case, controller 306 maintains this state (S121).

According to the second exemplary embodiment described above, even if the time when a vehicle receives a control signal from a remote manipulator is delayed due to a lowered state of the communication between remote manipulator 200 and operation control device 300, it is possible to wait for a recovery of the communicating state by stopping the vehicle, thereby achieving a safe automatic remote operation.

### THIRD EXEMPLARY EMBODIMENT

In the first exemplary embodiment, if the communication delay time is equal to or more than the preset value, controller 306 changes the normal control to the safety control by reducing the vehicle speed that has been under the normal control. In this exemplary embodiment, controller 306 changes the normal control to the safety control, operation control device 300 notifies remote manipulator 200 of change information which indicates that the change has been done.

A configuration of an operation control system according to this exemplary embodiment is similar to the configuration illustrated in FIG. 1 and will not be described accordingly. In this exemplary embodiment, however, processes are added to controller 306 and transmitter 307 included in operation control device 300 and receiver 205, controller 206, and notification unit 208 included in remote manipulator 200.

Controller 306 included in operation control device 300 compares the communication delay time with the preset value (threshold). If the communication delay time is equal to or more than the preset value, controller 306 changes the control of the vehicle in the normal state (normal control) to safe control suitable for a case where any abnormality occurs (safety control). In this case, controller 306 generates a change notification signal (corresponding to the delay notification information) containing the change information indicating that the change to the safety control has been made. Then, controller 306 outputs the generated change notification signal to transmitter 307.

Transmitter 307 transmits the change notification signal received from controller 306 to remote manipulator 200 in a wireless manner.

Receiver 205 included in remote manipulator 200 receives the change notification signal from operation control device 300 in a wireless manner. Then, receiver 205 outputs the received change notification signal to controller 206.

Controller 206 acquires the change information from the received change notification signal. Then, controller 206 outputs the change information to notification unit 208.

Notification unit 208 notifies the user of the change information received from controller 206. In this way, remote manipulator 200 can notifies the user that the control of the vehicle has been changed to the safety control.

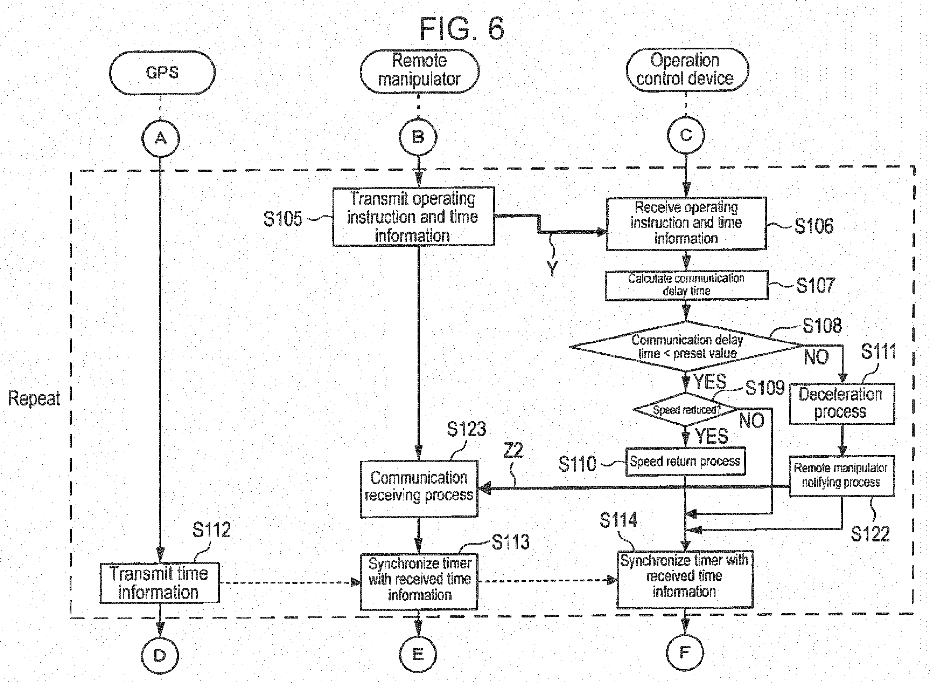

Next, the operation control system in this exemplary embodiment will be described with reference to FIG. 6. FIG. 6 is a portion of a flowchart indicating the operation control system in this exemplary embodiment. The flow in FIG. 6 is performed between the first flowchart in FIG. 2 and the third flowchart in FIG. 5. The first flowchart and the third flowchart are identical to the first exemplary embodiment and will not be described accordingly.

In the flowchart illustrated in FIG. 6, S122 is interposed between S111 and S114 in the flowchart illustrated in FIG. 3, and S123 is interposed between S105 and S113 in the flowchart illustrated in FIG. 3. Hereinafter, of the steps in the flowchart illustrated in FIG. 6, the steps similar to those in FIG. 3 will not be described and only interposed steps S122 and S123 will be described.

At S111, controller 306 changes the normal control to the safety control by reducing the vehicle speed that has been under the normal control. Then, the processing proceeds to S122.

Controller 306 generates the change notification signal containing the change information indicating that controller 306 has changed the normal control to the safety control by reducing the vehicle speed that has been under the normal control. Then, controller 306 outputs the generated change notification signal to transmitter 307. Transmitter 307 transmits the change notification signal (arrow Z2 in FIG. 6) received from controller 306 to remote manipulator 200 in a wireless manner (S122).

Receiver 205 included in remote manipulator 200 receives the change notification signal from operation control device 300 in a wireless manner and then outputs the received change notification signal to controller 206. Controller 206 acquires the change information from the received change notification signal and then outputs the change information to notification unit 208. Notification unit 208 notifies the user that the change information has been received from controller 206 (S123).

According to this exemplary embodiment, as described above, even if the time when a vehicle receives a control signal from a remote manipulator is delayed due to a lowered state of the communication between remote manipulator 200 and operation control device 300, change information is notified to a user. This enables the user to grasp the communicating state.

In the description above, operation control device 300 notifies a user of the change information by transmitting the change notification signal to remote manipulator 200. However, this exemplary embodiment is not limited to this. For example, operation control device 300 may notifies the user of the change information which indicates that the normal control has been changed to the safety control by lighting a warning lamp provided in a vehicle. Alternatively, operation control device 300 may notifies the user of the change information which indicates that the normal control has been changed to the safety control by activating a horn provided in the vehicle. These configurations may be combined with each other.

It should be noted that in this exemplary embodiment, controller 306 does not have to reduce a vehicle speed as long as a user can recognize the communicating state.

### FOURTH EXEMPLARY EMBODIMENT

In the automatic operation control of a vehicle, the vehicle typically has a plurality of obstacle sensors to sense any obstacle in its surrounding area. In this exemplary embodiment, under the safety control, an obstacle sensor used to sense an obstacle in the normal control is switched to another obstacle sensor having a higher performance.

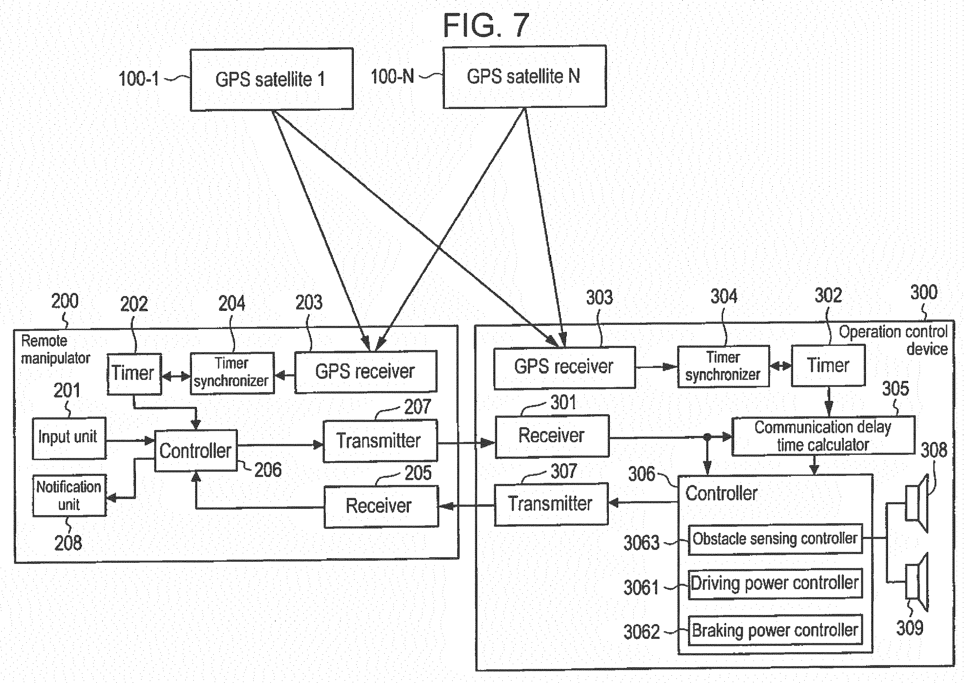

FIG. 7 is a view of an exemplary operation control system according to this exemplary embodiment. This operation control system further includes obstacle sensing controller 3063, first obstacle sensor 308, and second obstacle sensor 309 in addition to the operation control system illustrated in FIG. 1. The configurations similar to those illustrated in FIG. 1 will not be described.

Each of first obstacle sensor 308 and second obstacle sensor 309 senses an obstacle present in a surrounding area of the vehicle. In this exemplary embodiment, first obstacle sensor 308 has a higher performance than second obstacle sensor 309. Under the normal control, second obstacle sensor 309 is activated, but first obstacle sensor 308 is not activated.

One example of first obstacle sensor 308 is a sensor, such as a laser radar, that exhibits a high performance and high power consumption. One example of second obstacle sensor 309 is a sensor, such as a sonar, that exhibits a low performance but is superior to a laser radar in terms of power consumption. It should be noted that the obstacle sensors are not limited to these.

Obstacle sensing controller 3063 is included in controller 306. Obstacle sensing controller 3063 controls the switching between first obstacle sensor 308 and second obstacle sensor 309.

More specifically, if the communication delay time is equal to or more than the preset value, controller 306 switches second obstacle sensor 309 that has been used under the normal control to first obstacle sensor 308. In response to this switching, controller 306 changes the normal control to the safety control. More specifically, obstacle sensing controller 3063 included in controller 306 switches second obstacle sensor 309 to first obstacle sensor 308.

If the communication delay time is less than the preset value and first obstacle sensor 308 has been used, controller 306 changes the safety control to the normal control by switching first obstacle sensor 308 to second obstacle sensor 309. More specifically, obstacle sensing controller 3063 included in controller 306 switches first obstacle sensor 308 to second obstacle sensor 309.

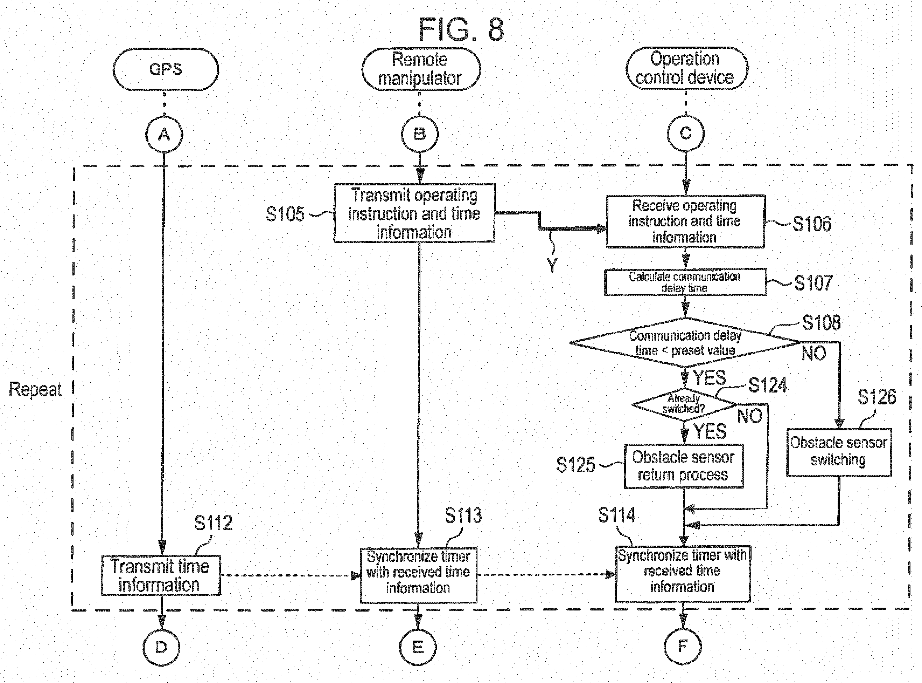

Next, the operation control system in this exemplary embodiment will be described with reference to FIG. 8. FIG. 8 is a portion of a flowchart indicating the operation control system in this exemplary embodiment. The flow in FIG. 8 is performed between the first flowchart in FIG. 2 and the third flowchart in FIG. 4. The first flowchart (FIG. 2) and the third flowchart (FIG. 4) are identical to the first exemplary embodiment and will not be described accordingly.

In the flowchart illustrated in FIG. 8, S124 to S126 are the replacement for S109 to S111 in the flowchart illustrated in FIG. 3. Hereinafter, of the steps in the flowchart illustrated in FIG. 8, steps similar to those in FIG. 3 will not be described and only substituted steps S124 to S126 will be described.

If the communication delay time is less than the preset value at S108, controller 306 determines whether the switching to the first obstacle sensor has been done (S124). If it is determined that the switching to the first obstacle sensor has been done at S124, the processing proceeds to S125; otherwise, the processing proceeds to S114.

If it is determined that the switching to first obstacle sensor 308 has been done at S124, controller 306 changes the safety control to the normal control by switching first obstacle sensor 308 to second obstacle sensor 309 (return process) (S125).

If the communication delay time is equal to or more than the preset value at S108, controller 306 changes the normal control to the safety control by switching second obstacle sensor 309 to first obstacle sensor 308. In this case, if the switching to first obstacle sensor 308 has already been done, controller 306 maintains this state (S126).

According to this exemplary embodiment, as described above, even if the time when a vehicle receives a control signal from a remote manipulator is delayed due to a lowered state of the communication between remote manipulator 200 and operation control device 300, an obstacle sensor provided in the vehicle is switched to another. This switching makes it possible to sense any obstacle accurately, achieving a safe automatic remote operation. Specifically, in this exemplary embodiment, operation control device 300 sets a sensing accuracy of its obstacle sensor under the operation control of the safety control to be higher than that in a normal state.

This exemplary embodiment has been described regarding the case where a vehicle has two obstacle sensors; however, this exemplary embodiment is not limited to this. The vehicle may have three or more obstacle sensors, and controller 306 may change the normal state to the safety control by switching between these obstacle sensors. Alternatively, the vehicle may have a single obstacle sensor, and controller 306 may vary its sensitivity. For example, if a laser radar is used as the obstacle sensor, controller 306 may switch its laser output.

### FIFTH EXEMPLARY EMBODIMENT

To achieve the automatic operation control of a vehicle in the fourth exemplary embodiment, the vehicle has a plurality of obstacle sensors (e.g., sensors) to sense any obstacle in its surrounding area. First, the obstacle sensor transmits a signal toward its surrounding area and receives the reflected wave of this signal. Then, the obstacle sensor compares the reception intensity of the received reflected wave with a threshold possessed by the obstacle sensor, thereby sensing whether any obstacle is present in the surrounding area and a location of the obstacle.

A sensing accuracy of the obstacle sensor depends on a threshold possessed by the obstacle sensor. For example, by lowering the threshold, an error rate (also referred to as non-detection ratio), which is a possibility of determining that no obstacle is present although an obstacle is present, can be decreased. However, an error rate (also referred to as a false detection ratio), which is a possibility of determining that an obstacle is present although no obstacle is present, can be increased.

To control a vehicle safely, it is necessary to decrease the non-detection ratio even if the false detection ratio increases. To ensure the safety control in this exemplary embodiment, when the normal control is changed to the safety control, a threshold used by an obstacle sensor is set to be less than that used under the normal control.

A configuration of an operation control system according to this exemplary embodiment is similar to the configuration illustrated in FIG. 7 and will not be described accordingly. In this exemplary embodiment, however, controller 306, obstacle sensing controller 3063, first obstacle sensor 308, and second obstacle sensor 309 included in operation control device 300 performs processing somewhat different from that in the fourth exemplary embodiment.

Each of first obstacle sensor 308 and second obstacle sensor 309 senses an obstacle present in a surrounding area of the vehicle. In this exemplary embodiment, both of first obstacle sensor 308 and second obstacle sensor 309 are activated and have respective thresholds used to determine whether any obstacle is present.

Obstacle sensing controller 3063 changes the thresholds possessed by first obstacle sensor 308 and second obstacle sensor 309. A description will be given below regarding an exemplary case where obstacle sensing controller 3063 changes the threshold possessed by first obstacle sensor 308.

If the communication delay time is equal to or more than the preset value, controller 306 changes the normal control to the safety control by lowering the threshold of first obstacle sensor 308 which has been used under the normal control. More specifically, obstacle sensing controller 3063 included in controller 306 lowers the threshold of first obstacle sensor 308.

If the communication delay time is less than the preset value and the threshold of first obstacle sensor 308 has been changed to a small value, controller 306 changes the safety control to the normal control by returning the threshold of first obstacle sensor 308 to the threshold that has been used under the normal control. More specifically, obstacle sensing controller 3063 included in controller 306 returns the threshold of first obstacle sensor 308 to the threshold that has been used under the normal control.

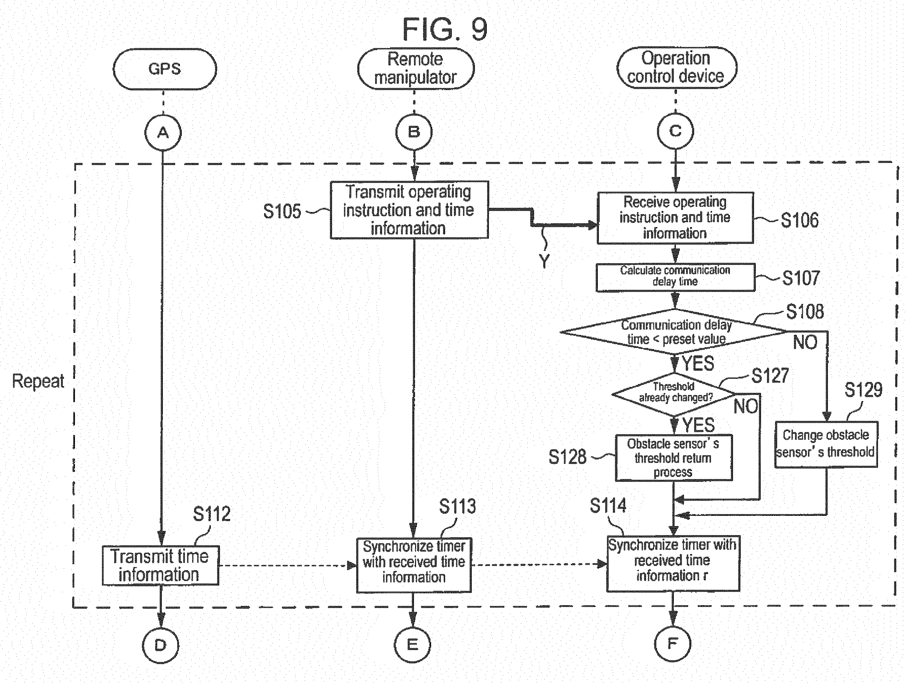

Next, an operation control system in this exemplary embodiment will be described with reference to FIG. 9. FIG. 9 is a portion of a flowchart indicating the operation control system in this exemplary embodiment. FIG. 9 illustrates a flow performed between the first flowchart illustrated in FIG. 2 and the third flowchart illustrated in FIG. 4. The first flowchart (FIG. 2) and the third flowchart (FIG. 4) are identical to the first exemplary embodiment and will not be described accordingly.

In the flowchart illustrated in FIG. 9, S127 to S129 are the replacement for S109 to S111 in the flowchart illustrated in FIG. 3. Hereinafter, of the steps in the flowchart illustrated in FIG. 9, steps similar to those in FIG. 3 will not be described and only substituted steps S127 to S129 will be described.

If the communication delay time is less than the preset value at S108, controller 306 determines whether the threshold of first obstacle sensor 308 has been changed to a small value (S127). If it is determined that the threshold of first obstacle sensor 308 has been changed to a small value at S127, the processing proceeds to S128; otherwise, the processing proceeds to S114.

If it is determined that the threshold of first obstacle sensor 308 has been changed to a small value at S127, controller 306 changes the safety control to the normal control by returning the threshold of first obstacle sensor 308 to the threshold that has been used under the normal control (threshold return process) (S128).

If the communication delay time is equal to or more than the preset value at S108, controller 306 changes the normal control to the safety control by lowering the threshold of first obstacle sensor 308 which has been used under the normal control. In this case, if the threshold of first obstacle sensor 308 has been changed to a small value, controller 306 maintains this state (S129).

According to this exemplary embodiment, as described above, even if the time when a vehicle receives a control signal from a remote manipulator is delayed due to a lowered state of the communication between remote manipulator 200 and operation control device 300, a sensing accuracy of an obstacle sensor possessed by a vehicle is varied. Then, by sensing an obstacle with higher accuracy, a safe automatic remote operation can be achieved.

The description has been given below regarding the case where, if the communication delay time is equal to or more than the preset value, a threshold of first obstacle sensor 308 which has been used for the normal control is lowered. However, any parameter other than a threshold possessed by an obstacle sensor may be varied. For example, by varying a sampling rate possessed by an obstacle sensor, sensing accuracy or frequency may be varied. In other words, a sensing cycle of an obstacle sensor under the operation control of the safety control may be set to be shorter than that in a normal state.

### SIXTH EXEMPLARY EMBODIMENT

In the foregoing exemplary embodiments, processing is repeatedly performed by an operation control system until an automatic remote operation has been completed. In the first exemplary embodiment, for example, the processes at S105 to S114 are repeated until the automatic remote operation has been completed, as illustrated in FIG. 2. In contrast with this, in this exemplary embodiment, the repeat is not done, and the individual processes are performed only once. Hereinafter, a description will be given based on the comparison with the first exemplary embodiment.

A configuration of an operation control system according to this exemplary embodiment is similar to the configuration illustrated in FIG. 1 and will not be described accordingly. However, this exemplary embodiment differs from the first exemplary embodiment in that each configuration does not repeat processing.

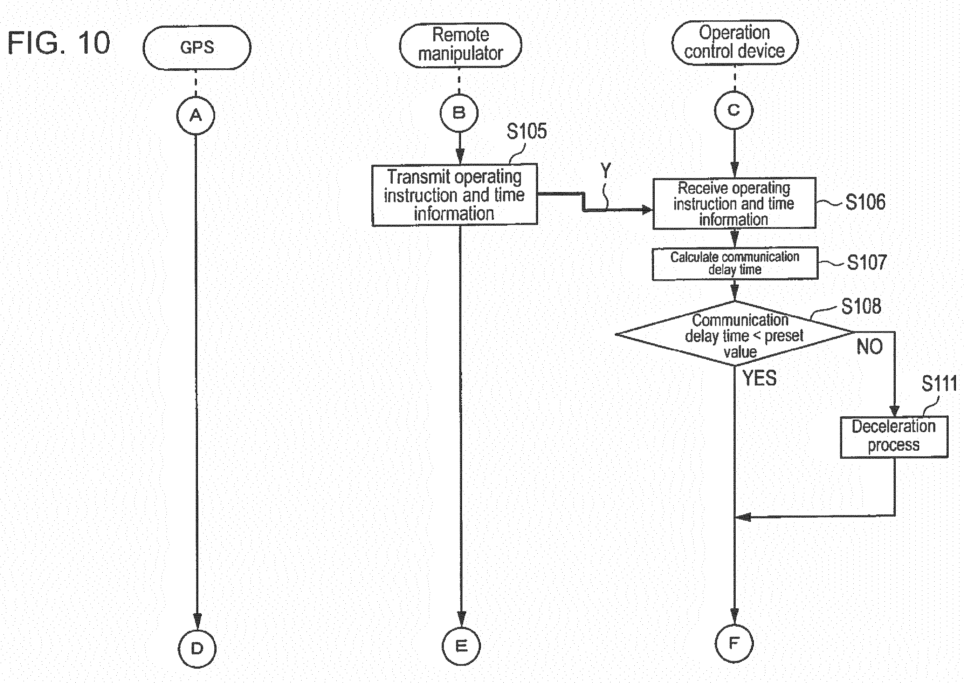

Next, an operation control system in this exemplary embodiment will be described with reference to FIG. 10. FIG. 10 is a second flowchart indicating an operation control system in this exemplary embodiment. First and third flowcharts in this exemplary embodiment are identical to the first flowchart (FIG. 2) and third flowchart (FIG. 4) in the first exemplary embodiment and will not be described accordingly.

The flowchart illustrated in FIG. 10 is obtained by modifying the flowchart illustrated in FIG. 3 such that S109, S110, and S112 to S114 are deleted and a repeat process is not performed. Of the steps in the flowchart illustrated in FIG. 10, steps similar to those in FIG. 3 will not be described and only modifications made to FIG. 3 will be described below.

If the communication delay time is less than the preset value at S108 in FIG. 10, controller 306 does not have to change the vehicle speed and maintains the speed accordingly. Then, the processing proceeds to S115.

According to this exemplary embodiment, as described above, even if the time when a vehicle receives a control signal from a remote manipulator is delayed due to a lowered state of the communication between remote manipulator 200 and operation control device 300, controller 306 reduces a vehicle speed, achieving a safe automatic remote operation. In addition, by eliminating repeat processing, processes performed by operation control device 300 and remote manipulator 200 can be made simple.

The exemplary embodiments described above may be combined with one another as appropriate. For example, the deceleration process (S111 in FIG. 3) in the first exemplary embodiment and switching of obstacle sensors (S126 in FIG. 8) in the fourth exemplary embodiment may be performed together.

The present invention is not limited to concrete constructions and methods described in the foregoing exemplary embodiments. In the foregoing exemplary embodiments, for example, GPSs synchronize a timer in a remote manipulator with a timer in an operation control device; however, the present invention is not limited to this. For example, both timers may be synchronized with each other through intercommunications.

The exemplary embodiments have been described regarding the case where the present invention is implemented in hardware. However, the present invention may be implemented in software.

A technique for configuring an integrated circuit (IC) is not limited to a large scale integrated circuit (LSI). Alternatively, this technique may be implemented using a dedicated circuit or a general purpose processor. In addition, a field programmable gate array (FPGA) that can be programmed after assembling of an LSI or a reconfigurable processor in which interconnects and setting of circuit cells in an LSI can be reconfigured may be used.

It can be understood that, if advancing semiconductor technology and some relating techniques produce IC techniques that will be able to replace LSIs, these IC techniques may also be used to integrate functional blocks. For example, application of biotechnology may be promising.

### INDUSTRIAL APPLICABILITY

An operation control system and an operation control device according to the present invention are applicable appropriately to automatic remote operations of vehicles.

### REFERENCE MARKS IN THE DRAWINGS

100-1 to 100-N GPS satellite
200 remote manipulator
201 input unit
202, 302 timer
203, 303 GPS receiver
204, 304 timer synchronizer
205, 301 receiver
206, 306 controller
207, 307 transmitter
208 notification unit
300 operation control device
305 communication delay time calculator (calculator)
308 first obstacle sensor
309 second obstacle sensor
3061 driving power controller
3062 braking power controller
3063 obstacle sensing controller

## Claims

1. An operation control system comprising:
a remote manipulator (200), being a remote control, including a transmitter (207) that transmits a signal containing time information; and
an operation control device (300) that conducts wireless communication with the remote manipulator (200) to perform vehicle operation control,
the operation control device (300) including:
a clock (302);
a receiver (301) that receives the signal containing the time information from the remote manipulator (200);
a calculator (305) that calculates a delay time of the wireless communication, based on the time information and a time indicated by the clock (302); and
a controller (306) that, when the delay time is equal to or more than a threshold, changes the vehicle operation control from a normal control to a safety control,
**characterized in that**
the operation control device (300) further includes an obstacle sensor (308) that senses an obstacle in a surrounding area of a vehicle targeted for the vehicle operation control, and
the operation control device (300) performs the vehicle operation control in such a way that a sensing accuracy of the obstacle sensor (308) under an operation control in the safety control is set to be higher than the sensing accuracy of the obstacle sensor (308) in the normal control.

2. The operation control system according to claim 1, wherein
the receiver (301) repeatedly receives signals each containing the time information from the remote manipulator (200),
the calculator (305) calculates the delay time every time a signal containing the time information is received, and
the controller (306) compares the delay time with the threshold every time the signal containing the time information is received.

3. The operation control system according to claim 2, wherein
when the delay time becomes less than the threshold after the vehicle operation control has been changed to the safety control, the controller (306) changes the vehicle operation control from the safety control to the normal control.

4. The operation control system according to claim 2, wherein
the operation control device (300) further includes a transmitter (307) that, when the delay time is equal to or more than the threshold, transmits delay notification information to the remote manipulator (200), the delay notification information indicating a communication delay, and
the remote manipulator (200) further includes a notification unit (208) that, when the delay notification information is received, notifies an outside of the communication delay.

5. The operation control system according to claim 1, wherein
the vehicle operation control in which a speed of a vehicle under an operation control in the safety control is set to be lower than the speed of the vehicle in the normal state is performed, or the vehicle operation control in which the vehicle is stopped is performed in the operation control in the safety control.

6. The operation control system according to claim 1, wherein
the operation control device (300) performs the vehicle operation control in such a way that a determination threshold used to sense the obstacle with the obstacle sensor (308) under an operation control in the safety control is set to be lower than the determination threshold in the normal control or in such a way that a sensing cycle of the obstacle sensor (308) under the operation control in the safety control is set to be lower than the sensing cycle in the normal control.

7. The operation control system according to claim 1, wherein
the operation control device (300) further includes a transmitter (307) that, when the delay time is equal to or more than the threshold, transmits delay notification information to the remote manipulator (200), the delay notification information indicating a communication delay, and
the remote manipulator (200) further includes a notification unit (208) that, when the delay notification information is received, notifies an outside of the communication delay.

## Patentansprüche

1. Betriebssteuerungssystem, umfassend:
einen Fernmanipulator (200), der eine Fernsteuerung ist, der einen Sender (207) umfasst, der ein Signal überträgt, das Zeitinformation enthält;
eine Betriebssteuerungsvorrichtung (300), die kabellose Kommunikation mit dem Fernmanipulator (200) durchführt, um Fahrzeugbetriebssteuerung durchzuführen, wobei
die Betriebssteuerungsvorrichtung (300) umfasst:
eine Uhr (302);
einen Empfänger (301), der das Signal, das die Zeitinformation beinhaltet, von dem Fernmanipulator (200) empfängt;
einen Rechner (305), der eine Verzögerungszeit der kabellosen Kommunikation berechnet, basierend auf der Zeitinformation und einer Zeit, die von der Uhr (302) angegeben wird; und
eine Steuerung (306), die, wenn die Verzögerungszeit gleich oder größer als ein Schwellenwert ist, die Fahrzeugbetriebssteuerung von einer normalen Steuerung zu einer Sicherheitssteuerung ändert,
**dadurch gekennzeichnet, dass**
die Betriebssteuerungsvorrichtung (300) ferner einen Hindernissensor (308) umfasst, der ein Hindernis in einem Umgebungsbereich des Fahrzeugs erfasst, das für die Fahrzeugbetriebssteuerung bestimmt ist, und
die Betriebssteuerungsvorrichtung (300) die Fahrzeugbetriebssteuerung so durchführt, dass eine Erfassungsgenauigkeit des Hindernissensors (308) unter einer Betriebssteuerung in der Sicherheitssteuerung höher eingestellt wird als die Erfassungsgenauigkeit des Hindernissensors (308) in der normalen Steuerung.

2. Betriebssteuerungssystem nach Anspruch 1, wobei
der Empfänger (301) wiederholt Signale von dem Fernmanipulator (200) empfängt, die jeweils die Zeitinformation enthalten,
der Rechner (305) die Verzögerungszeit jedes Mal berechnet, wenn ein Signal, das die Zeitinformation enthält, empfangen wird, und
die Steuerung (306) die Verzögerungszeit mit dem Schwellenwert jedes Mal, wenn das Signal, das die Zeitinformation enthält, empfangen wird, vergleicht.

3. Betriebssteuerungssystem nach Anspruch 2, wobei
wenn die Verzögerungszeit kleiner als der Schwellenwert wird, nachdem die Fahrzeugbetriebssteuerung zu der Sicherheitssteuerung geändert wurde, die Steuerung (306) die Fahrzeugbetriebssteuerung von der Sicherheitssteuerung zu der normalen Steuerung ändert.

4. Betriebssteuerungssystem nach Anspruch 2, wobei
die Betriebssteuerungsvorrichtung (300) ferner einen Sender (307) umfasst, der, wenn die Verzögerungszeit gleich oder größer als der Schwellenwert ist, Verzögerungs-Benachrichtigungsinformation an den Fernmanipulator (200) überträgt, wobei die Verzögerungs-Benachrichtigungsinformation eine Kommunikationsverzögerung anzeigt, und
der Fernmanipulator (200) ferner eine Benachrichtigungseinheit (208) umfasst, die, wenn die Verzögerungs-Benachrichtigungsinformation empfangen wird, eine Außenseite über die Kommunikationsverzögerung benachrichtigt.

5. Betriebssteuerungssystem nach Anspruch 1, wobei
die Fahrzeugbetriebssteuerung, bei der eine Geschwindigkeit eines Fahrzeugs unter einer Betriebssteuerung in der Sicherheitssteuerung so eingestellt ist, dass sie niedriger als die Geschwindigkeit des Fahrzeugs im normalen Zustand ist, durchgeführt wird, oder die Fahrzeugbetriebssteuerung, bei der das Fahrzeug angehalten wird, durchgeführt wird, in der Fahrzeugbetriebssteuerung in der Sicherheitssteuerung.

6. Betriebssteuerungssystem nach Anspruch 1, wobei
die Betriebssteuerungsvorrichtung (300) die Fahrzeugbetriebssteuerung so durchführt, dass ein Bestimmungsschwellenwert, der genutzt wird, um das Hindernis mit dem Hindernissensor (308) zu erfassen, unter einer Betriebssteuerung in der Sicherheitssteuerung so eingestellt wird, dass er kleiner als der Bestimmungsschwellenwert in der normalen Steuerung ist, oder so, dass ein Erfassungszyklus des Hindernissensors (308) unter der Betriebssteuerung in der Sicherheitssteuerung so eingestellt wird, dass er kleiner als der Erfassungszyklus in der normalen Steuerung ist.

7. Betriebssteuerungssystem nach Anspruch 1, wobei
die Betriebssteuerungsvorrichtung (300) ferner einen Sender (307) umfasst, der, wenn die Verzögerungszeit gleich oder größer als der Schwellenwert ist, Verzögerungs-Benachrichtigungsinformation an den Fernmanipulator (200) überträgt, wobei die Verzögerungs-Benachrichtigungsinformation eine Kommunikationsverzögerung anzeigt, und
der Fernmanipulator (200) ferner eine Benachrichtigungseinheit (208) umfasst, die, wenn die Verzögerungs-Benachrichtigungsinformation empfangen wird, eine Außenseite über die Kommunikationsverzögerung benachrichtigt.

## Revendications

1. Système de contrôle de fonctionnement comprenant :
un manipulateur distant (200), consistant en une télécommande, incluant un émetteur (207) qui transmet un signal contenant des informations temporelles ; et
un dispositif de contrôle de fonctionnement (300) qui conduit une communication sans fil avec le manipulateur distant (200) pour exécuter un contrôle de fonctionnement de véhicule,
le dispositif de contrôle de fonctionnement (300) comprenant :
une horloge (302) ;
un récepteur (301) qui reçoit le signal contenant les informations temporelles issues du manipulateur distant (200) ;
un calculateur (305) qui calcule un délai de la communication sans fil, selon les informations temporelles et une heure indiquée par l'horloge (302) ; et
un contrôleur (306) qui, lorsque le délai est supérieur ou égale à un seuil, change le contrôle de fonctionnement de véhicule d'un contrôle normal en un contrôle de sécurité,
**caractérisé en ce que**
le dispositif de contrôle de fonctionnement (300) inclut en outre un détecteur d'obstacle (308) qui détecte un obstacle dans une zone environnante d'un véhicule ciblé pour le contrôle de fonctionnement de véhicule, et
le dispositif de contrôle de fonctionnement (300) exécute le contrôle de fonctionnement de véhicule de telle sorte qu'une précision de détection du capteur d'obstacle (308) sous un contrôle de fonctionnement en le contrôle de sécurité est fixée pour être supérieure à la précision de détection du capteur d'obstacle (308) en le contrôle normal.

2. Le système de contrôle de fonctionnement selon la revendication 1, dans lequel
le récepteur (301) reçoit de manière répétée des signaux dont chacun contient les informations temporelles issues du manipulateur distant (200),
le calculateur (305) calcule le délai à chaque fois qu'un signal contenant les informations temporelles est reçu, et
le contrôleur (306) compare le délai au seuil à chaque fois que le signal contenant les informations temporelles est reçu.

3. Le système de contrôle de fonctionnement selon la revendication 2, dans lequel
lorsque le délai temporel devient inférieur au seuil après que le contrôle de fonctionnement de véhicule est changé en le contrôle de sécurité, le contrôleur (306) change le contrôle de fonctionnement de véhicule du contrôle de sécurité en le contrôle normal.

4. Le système de contrôle de fonctionnement selon la revendication 2, dans lequel
le dispositif de contrôle de fonctionnement (300) inclut en outre un émetteur (307) qui, lorsque le délai est supérieur ou égal au seuil, transmet des informations de notification de délai au manipulateur distant (200), les informations de notification de délai indiquant un délai de communication, et
le manipulateur distant (200) inclut en outre une unité de notification (208) qui, lorsque les informations de notification de délai sont reçues, notifie un extérieur du délai de communication.

5. Le système de contrôle de fonctionnement selon la revendication 1, dans lequel
le contrôle de fonctionnement de véhicule dans lequel une vitesse d'un véhicule sous un contrôle de fonctionnement en le contrôle de sécurité est définie pour être inférieure à la vitesse du véhicule dans l'état normal est exécuté, ou le contrôle de fonctionnement de véhicule dans lequel le véhicule est arrêté est effectué sous le contrôle de fonctionnement en le contrôle de sécurité.

6. Le système de contrôle de fonctionnement selon la revendication 1, dans lequel
le dispositif de contrôle de fonctionnement (300) exécute le contrôle de fonctionnement de véhicule de telle sorte qu'un seuil de détermination utilisé pour détecter l'obstacle avec le détecteur d'obstacle (308) sous un contrôle de fonctionnement en le contrôle de sécurité est défini pour être inférieur au seuil de détermination en le contrôle normal ou de telle sorte qu'un cycle de détection du capteur d'obstacle (308) sous le contrôle de fonctionnement en le contrôle de sécurité est défini pour être inférieur au cycle de détection en le contrôle normal.

7. Le système de contrôle de fonctionnement selon la revendication 1, dans lequel
le dispositif de contrôle de fonctionnement (300) inclut en outre un émetteur (307) qui, lorsque le délai est supérieur ou égal au seuil, transmet des informations de notification de délai au manipulateur distant (200), les informations de notification de délai indiquant un délai de communication, et
le manipulateur distant (200) inclut en outre une unité de notification (208) qui, lorsque les informations de notification de délai sont reçues, notifie un extérieur du délai de communication.
